# EUROPEAN PATENT SPECIFICATION

(11) **EP 3 851 983 B1**
(45) Date of publication and mention of the grant of the patent: **29.03.2023**
(21) Application number: 20861986.6
(22) Date of filing: 14.07.2020
(51) Int. Cl.: G06F 21/31, G06F 21/10, H04W 12/08, H04L 9/08

(54) **AUTHORIZATION METHOD, AUXILIARY AUTHORIZATION COMPONENT, MANAGEMENT SERVER AND COMPUTER READABLE MEDIUM**
AUTORISIERUNGSVERFAHREN, HILFSKOMPONENTE FÜR AUTORISIERUNG, VERWALTUNGSSERVER UND COMPUTERLESBARES MEDIUM
PROCÉDÉ D'AUTORISATION, COMPOSANT D'AUTORISATION AUXILIAIRE, SERVEUR DE GESTION ET SUPPORT LISIBLE PAR ORDINATEUR

(30) Priority: 17.02.2020 CN 202010097872
(43) Date of publication of application: 21.07.2021
(73) Proprietor: BEIJING BAIDU NETCOM SCIENCE TECHNOLOGY CO., LTD., Beijing 100085 (CN)
(72) Inventor: HUANG, Youxin, Beijing 100085 (CN); CHEN, Xin, Beijing 100085 (CN); ZHANG, Yulong, Beijing 100085 (CN)
(74) Representative: Canzler & Bergmeier Patentanwälte Partnerschaft mbB
(86) International application number: PCT/CN2020/101795
(87) International publication number: WO 2021/098241

(56) References cited:
- WO-A1-2018/209138
- CN-A- 102 238 007
- CN-A- 103 347 002
- CN-A- 103 795 692
- CN-A- 105 207 974
- CN-A- 108 712 382
- CN-A- 111 259 356
- US-B2- 9 178 874

## Description

### TECHNICAL FIELD

The present disclosure relates to the field of computer technology and can be applied to the field of cloud platform technology, and particularly to an authorization method, an auxiliary authorization component, a management server and a computer-readable medium.

### BACKGROUND

Currently, based on a code conversion tool or a unified development framework, a developer application (e.g., a smart applet) can be developed once and operated on a plurality of terminals, that is, the developer application can support cross-platform operation. Generally, since different platforms use different account management systems, when a developer application is operated across platforms, a user information authorization is required on a new host platform. Therefore, in order to truly realize the cross-platform operation of the developer application, it is necessary to achieve cross-platform authorization. Document CN 108 712 382 discloses ensuring security of authorization process and secure login of a third-party application. Document US 9 178 874 discloses a client terminal sending a data access request to a third party server which sends a validation request to a main server. Document WO 2018/209138 discloses a third party's authorization service that checks whether a customer is valid and utilizing their own login mechanism and an authorization code will be handed.

### SUMMARY

The invention is defined by the appended claims. According to embodiments of the present disclosure, provided are an authorization method, an auxiliary authorization component, a management server and a computer-readable medium.

In a first aspect, according to embodiments of the present disclosure, provided is an authorization method, applied to an auxiliary authorization component. The auxiliary authorization component is integrated in an open-source host application, and the authorization method includes: obtaining user's login authorization information, in response to a login request sent by a developer application; sending a login authorization request to an account manager of the open-source host application, the login authorization request including the login authorization information; receiving authorization success information fed back by the account manager, after the login authorization information is verified successfully, the authorization success information including an authorization code; and sending the authorization code to the developer application, to enable the developer application to obtain a session key corresponding to the authorization code from a management server.

In some embodiments, after sending the authorization code to the developer application, the authorization method further includes: forwarding a user information acquisition request sent by the developer application to the account manager, in response to the user information acquisition request; and receiving encrypted user information fed back by the account manager, and forwarding the user information to the developer application, to enable the developer application to decrypt the user information based on the session key.

In some embodiments, the login request includes: a host identifier of the open-source host application.

After obtaining the user's login authorization information, and before sending the login authorization request to the account manager of the open-source host application, the authorization method further includes: determining the account manager of the open-source host application according to the host identifier.

In some embodiments, the account manager includes: the management server or an open-source host platform in the open-source host application.

In a second aspect, according to embodiments of the present disclosure, provided is an authorization method, applied to a management server. The authorization method includes: acquiring a corresponding session key, according to an authorization code in a key acquisition request sent by a developer application, in response to receiving the key acquisition request; and feeding the session key back to the developer application.

In some embodiments, acquiring the corresponding session key, according to the authorization code in the key acquisition request includes: determining a user's account manager corresponding to the authorization code; generating the session key corresponding to the authorization code, in response to the account manager being the management server; and forwarding the key acquisition request to a third-party open-source host platform, in response to the account manager being the third-party open-source host platform, to enable the third-party open-source host platform to generate the session key corresponding to the authorization code; and receiving the session key fed back by the third-party open-source host platform.

In some embodiments, before receiving the key acquisition request sent by the developer application, the authorization method further includes: verifying login authorization information in a login authorization request sent by an auxiliary authorization component, in response to the login authorization request; and feeding authorization success information back to the auxiliary authorization component, after the login authorization information is verified successfully, the authorization success information including the authorization code.

In some embodiments, after feeding the session key back to the developer application, the authorization method further includes: Obtaining requested user information, in response to a user information acquisition request sent by an auxiliary authorization component; encrypting the user information by using the session key; and feeding the encrypted user information back to the auxiliary authorization component.

In a third aspect, according to embodiments of the present disclosure, provided is an auxiliary authorization component, integrated in an open-source host application. The auxiliary authorization component includes: a first acquisition module configured to obtain user's login authorization information, in response to a login request sent by a developer application; a first sending module configured to send a login authorization request to an account manager of the open-source host application, the login authorization request including the login authorization information; a first receiving module configured to, after the login authorization information is verified successfully, receive authorization success information fed back by the account manager, the authorization success information including an authorization code; and a second sending module configured to send the authorization code to the developer application, to enable the developer application to obtain a session key corresponding to the authorization code from a management server.

In some embodiments, the auxiliary authorization component further includes: a third sending module configured to forward a user information acquisition request sent by the developer application to the account manager, in response to the user information acquisition request; and a second receiving module configured to receive encrypted user information fed back by the account manager, and forward the user information to the developer application, to enable the developer application to decrypt the user information based on the session key.

In some embodiments, the login request includes: a host identifier of the open-source host application.

The auxiliary authorization component further includes: a determining module configured to determine the account manager of the open-source host application according to the host identifier.

In some embodiments, the account manager includes: the management server or an open-source host platform in the open-source host application.

In a fourth aspect, according to embodiments of the present disclosure, provided is a management server, including: a second acquisition module configured to acquire a corresponding session key, according to an authorization code in a key acquisition request sent by a developer application, in response to the key acquisition request; and a fourth sending module configured to feed the session key back to the developer application.

In some embodiments, the second acquisition module includes: a determining unit configured to determine a user's account manager corresponding to the authorization code; a generating unit configured to generate the session key corresponding to the authorization code, in response to the account manager being the management server; a sending unit configured to forward the key acquisition request to a third-party open-source host platform, in response to the account manager being the third-party open-source host platform, to enable the third-party open-source host platform to generate the session key corresponding to the authorization code; and a receiving unit configured to receive the session key fed back by the third-party open-source host platform.

In some embodiments, the management server further includes: a verification module configured to verify login authorization information in a login authorization request sent by an auxiliary authorization component, in response to the login authorization request; and a fifth sending module configured to, after the login authorization information is verified successfully, feed authorization success information back to the auxiliary authorization component, the authorization success information including the authorization code.

In some embodiments, the management server further includes: a third acquisition module configured to obtain requested user information, in response to a user information acquisition request sent by an auxiliary authorization component; an encryption module configured to encrypt the user information by using the session key; and a sixth sending module configured to feed the encrypted user information back to the auxiliary authorization component.

In a fifth aspect, according to embodiments of the present disclosure, provided is a computer-readable medium storing a computer program thereon, wherein the computer program is executed by a processor to implement the authorization method provided according to any one of the embodiments in the above first and second aspects.

The authorization method, auxiliary authorization component, management server and computer-readable medium provided according to the embodiments of the present disclosure, enable a user to authorize a part or all of its user information in an open-source host application to a developer application, so as to ensure cross-platform operation of the developer application.

### BRIEF DESCRIPTION OF THE DRAWINGS

The accompanying drawings are used to provide a further understanding of embodiments of the present disclosure, and constitute a part of the specification. The drawings, together with the embodiments of the present disclosure, are used to explain the present disclosure, rather than limiting the present disclosure. With the detailed description of exemplary embodiments with reference to the accompanying drawings, the above and other features and advantages will become more apparent to those skilled in the art. The drawings are as follows.
Fig. 1 is a schematic diagram of respective parties participating in cross-platform authorization according to an embodiment of the present disclosure.
Fig. 2 is a flowchart of an authorization method according to an embodiment of the present disclosure.
Fig. 3 is another flowchart of an authorization method according to an embodiment of the present disclosure.
Fig. 4 is another flowchart of an authorization method according to an embodiment of the present disclosure.
Fig. 5 is another flowchart of an authorization method according to an embodiment of the present disclosure.
Fig. 6 is a signaling interaction diagram for implementing an authorization method according to an embodiment of the present disclosure.
Fig. 7 is another signaling interaction diagram for implementing an authorization method according to an embodiment of the present disclosure.
Fig. 8 is a structural block diagram of an auxiliary authorization component according to an embodiment of the present disclosure.
Fig. 9 is a structural block diagram of a management server according to an embodiment of the present disclosure.

### DETAILED DESCRIPTION

In order to enable those skilled in the art to better understand the technical solutions of the present disclosure, an application sharing method and device, an electronic apparatus and a computer-readable medium according to the present disclosure will be described in detail below in conjunction with the accompanying drawings.

Although exemplary embodiments will be described in more detail below with reference to the accompanying drawings, the exemplary embodiments can be embodied in various forms, and should not be interpreted as limitation to the present disclosure. Rather, these embodiments are provided for facilitating thorough and complete understanding of the present disclosure, and enabling those skilled in the art to fully understand the scope of the present disclosure.

The embodiments and features in the embodiments can be combined with each other without conflict.

As used herein, the term "and/or" includes any and all combinations of one or more of the related listed items.

The terms used herein are intended to describe specific embodiments, rather than limiting the present disclosure. As used herein, the singular forms "a/an" and "the" are also intended to include the plural forms, unless the context clearly indicated otherwise. It should also be understood that when the terms "include" and/or "made of" are used in the present specification, it specifies the presence of the described features, integers, steps, operations, elements and/or components, but does not exclude the presence or addition of one or more other features, integers, steps, operations, elements, components, and/or combinations thereof.

Unless otherwise defined, the meanings of all terms (including technical and scientific terms) used herein are the same as those commonly understood by those having ordinary skill in the art. It should also be understood that terms such as those defined in commonly used dictionaries should be interpreted as having meanings consistent with their meanings in the related technology and in the background of the present disclosure, and will not be interpreted as having idealized or over formal meanings, unless specifically defined as such herein.

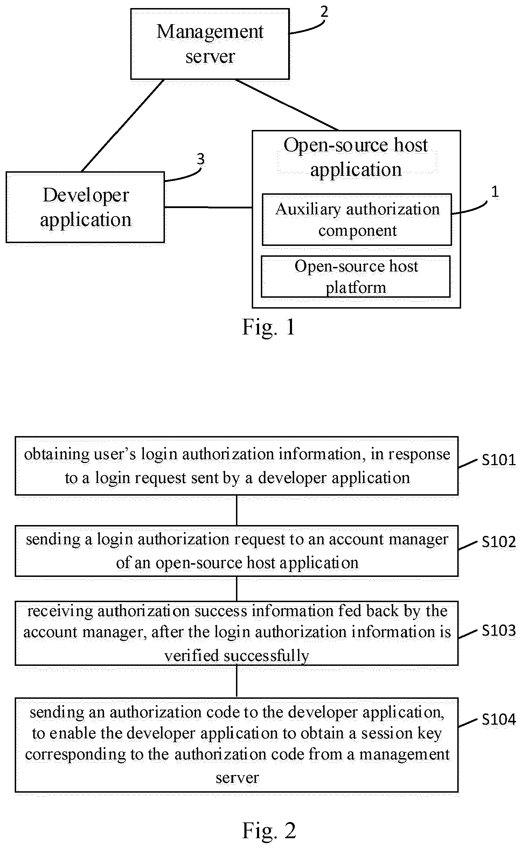

Fig. 1 is a schematic diagram of respective parties participating in cross-platform authorization according to an embodiment of the present disclosure. As shown in Fig. 1, parties in a cross-platform authorization process may include: a developer application, an open-source host application, and a management server.

A "developer" refers to a developer who develops an application (App, also called Mini Program) based on an open-source development platform. A "developer application" refers to the application developed by the developer based on the open-source development platform, and the application can support cross-platform operation. Take the "Baidu Smart Mini Program" platform as an example, which is an open-source mini program development platform, in order to break down barriers with other platforms, the Baidu Smart Mini Program platform is completely open and support the operation of Baidu applications (Apps) and external Apps (such as, Qutoutiao Apps, Kwai Apps, etc.), which realizes the one-time development and multi-terminal operation of Apps.

The "open-source host application" is a local application that can carry the running of the developer application and act as a host for the developer application, such as mobile Baidu App and WIFI smart key App. In the embodiments of the present disclosure, the open-source host application not only includes an open-source host platform supporting functions of the application, but is integrated with an auxiliary authorization component. The auxiliary authorization component will be described in detail below.

The "management server" is a back-end server of the open-source development platform. It manages an account system of the open-source development platform, and enables the open-source host application to access and register (which enables the open-source host application to be integrated with an auxiliary authorization component and carry the developer application developed based on the open-source development platform), and it can also manage account authorization of each open-source host application that has completed access registration. In addition, the management server may also share its own account system for an open-source host application that does not have its own independent account system, that is, a user may log in to the open-source host application based on an account of the open-source development platform.

Fig. 2 is a flowchart of an authorization method according to an embodiment of the present disclosure. As shown in Fig. 2, the authorization method is used to enable a user to authorize a part or all of its user information in an open-source host application to a developer application. The authorization method is executed by an auxiliary authorization component, which is integrated in the open-source host application, and the authorization method includes the following steps.

In step S101, the user's login authorization information is obtained, in response to a login request sent by the developer application.

In the embodiments of the present disclosure, the same auxiliary authorization component is integrated in different open-source host applications. The login request sent by the developer application includes a host identifier of the open-source host application to be accessed, and an authorization item required for user authorization (e.g., a user avatar, a user account, a user mobile phone number, user business data, etc.). Based on the host identifier, the auxiliary authorization component may determine whether an open-source host platform to which the user is to log in is identical to the open-source host platform of the open-source host application which the auxiliary authorization component belongs to. If not, the failure of the login request is reported to the developer application directly. If so, a pre-designed login interface is provided for the user to enter login information such as a login account, a password/verification code, etc.; and an authorization interface is provided for the user to confirm whether to authorize the developer application to use respective authorization item in the login request. If the user refuses to authorize, the information indicating that the user refuses to authorize will be fed back to the developer application. If the user agrees to authorize, the login information entered by the user and related authorization information for confirming authorization are obtained as the user's login authorization information, and step S 102 is then executed.

In step S102, a login authorization request is sent to an account manager of the open-source host application.

In some embodiments, before step S102, the method further includes a step of determining the account manager of the open-source host application according to the host identifier. In the embodiments of the present disclosure, there are two types of account systems for open-source host applications. In a first case, the open-source host application uses its own independent account system. In this case, the account manager of the open-source host application is the open-source host platform in the open-source host application, and the auxiliary authorization component sends the login authorization request to the open-source host platform in the open-source host application. In a second case, open-source host applications share the account system of the open-source development platform. In this case, the account manager of the open-source host application is a management server, and the auxiliary authorization component sends the login authorization request to the management server.

The auxiliary authorization component sends the login authorization request to the account manager of the open-source host application to enable the account manager to verify the login authorization information included in the login authorization request. Particularly, the account manager verifies whether the login information entered by the user is correct, and verifies whether the authorized items that the user has confirmed are within the user's authority. If the login information entered by the user is correct and the authorized items that the user has confirmed are within the user's authority, it means that the verification of the login authorization information is successful, the account manager generates an authorization code and sends authorization success information including the authorization code to the auxiliary authorization component, and step S103 is then executed. Otherwise, it means that the verification of the login authorization information fails, the account manager feeds back authorization failure information to the auxiliary authorization component, and the auxiliary authorization component displays the authorization failure information to the user.

The authorization code may be a user authorization identifier. After the user completes the authorization of the application and the authorization verification is successful, the account manager will generate an authorization identifier which is valid within a short period (e.g., 10 minutes). The authorization code may have a valid usage number, which is generally once.

In step S103, the authorization success information fed back by the account manager is received, after the login authorization information is verified successfully.

In step S103, the auxiliary authorization component receives the authorization success information fed back by the account manager, and the authorization success information includes the authorization code.

When the account manager is the management server, the authorization success information also includes an identifier indicating that the user has successfully logged in. The identifier is an identifier of the user's identity, which is composed of a user identifier (the field name of which is generally UId), an open-source host identifier (the field name of which is generally Host_Id), a current time (the field name of which is generally Current_Time), and/or information in other dimensions.

In step S104, the authorization code is sent to the developer application, to enable the developer application to obtain a session key corresponding to the authorization code from the management server.

In step S104, the auxiliary authorization component sends the authorization code to the developer application, and the developer application sends a key acquisition request to the management server to exchange for the session key corresponding to the authorization code. The key acquisition request may include: the authorization code, an application identifier (i.e., an application name of the developer application, the field name of which is generally Client_ID) and an application key (i.e., a secret key of the developer application, the field name of which is generally Secret_Key). According to a format of the authorization code, the management server may determine whether the authorization code is generated by itself or generated by another third-party open-source host platform.

If the authorization code is generated by the management server itself, the management server verifies the validity of the authorization code, generates the session key corresponding to the authorization code after the validity verification is successful, and feeds back a piece of Java Script Object Notation (JSON) text to the developer application. The piece of JSON text may include a user identity identifier (the field name of which is generally openid, which is composed of the application identifier of the developer application (AppID) and the user identifier (UId)) and the session key (the field name of which is generally Session_Key). If the validity verification of the authorization code fails, the management server will feed back another piece of JSON text to the developer application, and the piece of JSON text may include an error code (the field name of which is generally error) and error description information (the field name of which is generally error_description).

If the authorization code is generated by another third-party open-source host platform, the management server forwards the key acquisition request to the third-party open-source host platform; and the third-party open-source host platform verifies the validity of the authorization code, generates the session key corresponding to the authorization code after the validity verification is successful, and feeds back a piece of JSON text to the management server. The piece of JSON text includes the user identity identifier and the session key. If the validity verification of the authorization code fails, the third-party open-source host platform will feed back another piece of JSON text to the management server, and the piece of JSON text includes the error code and the error description information. The management server forwards the received JSON text to the developer application.

It should be noted that the process of generating the corresponding session key according to the authorization code is a conventional technology in the art, which will not be described in detail herein.

That the developer application obtains the session key indicates that the user authorization is successful.

The authorization method provided by the embodiments of the present disclosure can realize the cross-platform authorization of the user to the developer application.

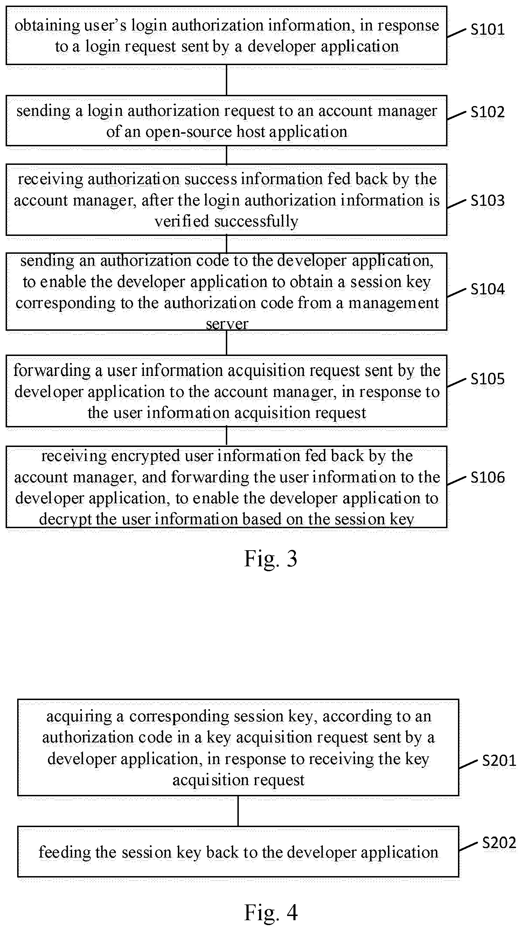

Fig. 3 is another flowchart of an authorization method according to an embodiment of the present disclosure. As shown in Fig. 3, different from the embodiment shown in Fig. 1, the authorization method shown in Fig. 3 not only includes the above steps S101 to S104, but further includes steps S105 and S106 after step S104. The steps S105 and S106 will be described in detail below.

In step S105, a user information acquisition request is forwarded to the account manager, in response to the user information acquisition request sent by the developer application.

The developer application sends the user information acquisition request to the auxiliary authorization component. The user information acquisition request includes the application identifier of the developer application, the user identifier of the authorized user, and the user information of the user requested by the developer application (e.g., a user avatar, a user account, a user mobile phone number, user business data, etc.). The auxiliary authorization component sends the user information acquisition request to the account manager of the open-source host application. The account manager determines the user information requested by the user information acquisition request from its own database, encrypts the determined user information by using the user's session key, and feeds the encrypted user information back to the auxiliary authorization component.

In step S106, the encrypted user information fed back by the account manager is received, and the user information is forwarded to the developer application, to enable the developer application to decrypt the user information based on the session key.

The auxiliary authorization component receives the encrypted user information fed back by the account manager and forwards the user information to the developer application. The developer application decrypts the received user information based on the previously obtained session key to obtain the user information in plain text.

Fig. 4 is another flowchart of an authorization method according to an embodiment of the present disclosure. As shown in Fig. 4, the authorization method may be executed by a management server, and the authorization method may include the following steps.

In step S201, a corresponding session key is acquired according to an authorization code in a key acquisition request, in response to receiving the key acquisition request sent by a developer application.

After obtaining the authorization code, the developer application sends the key acquisition request to the management server. The key acquisition request includes the authorization code, an application identifier, and an application key. According to a format of the authorization code, the management server determines whether the authorization code is generated by itself or generated by another third-party open-source host platform. If the authorization code is generated by the management server itself, the management server obtains the corresponding session key according to the authorization code generated by the management server. If the authorization code is generated by another third-party open-source host platform, the management server forwards the key acquisition request to the third-party open-source host platform; the third-party open-source host platform generates the session key corresponding to the authorization code, and feeds the session key back to the management server; and the management server receives the session key fed back by the third-party open-source host platform.

In step S202, the session key is fed back to the developer application.

After the management server obtains the session key corresponding to the authorization code, the management server feeds the session key back to the developer application.

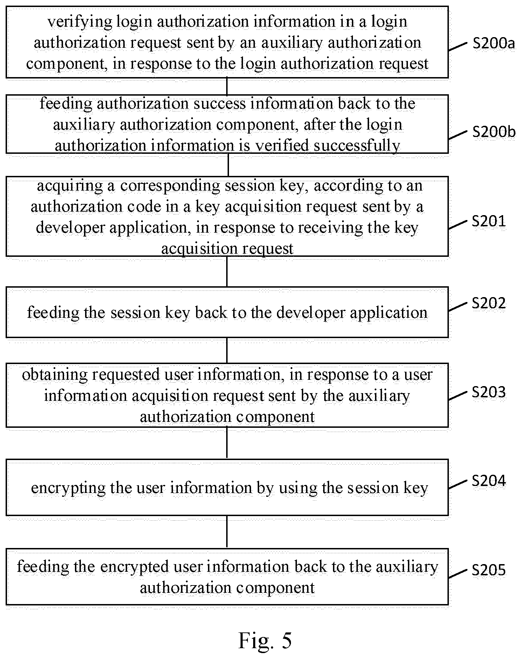

Fig. 5 is another flowchart of an authorization method according to an embodiment of the present disclosure. As shown in Fig. 5, in this embodiment, an open-source host application does not have its own independent account system, and uses an account system of an open-source development platform, that is, a management server shares its own account system with the open-source host application. Different from the embodiment shown in Fig. 4, the authorization method not only includes the above steps S201 and S202, but further includes steps S200a and S200b before step S201, and steps S203, S204 and S205 after step S202.

In step S200a, login authorization information in a login authorization request is verified, in response to the login authorization request sent by an auxiliary authorization component.

In step S200b, authorization success information is fed back to the auxiliary authorization component, after the verification of the login authorization information is successful, and the authorization success information includes the authorization code.

In step S201, a corresponding session key is acquired according to the authorization code in a key acquisition request, in response to receiving the key acquisition request sent by a developer application.

In step S202, the session key is fed back to the developer application.

In step S203, requested user information is obtained, in response to a user information acquisition request sent by the auxiliary authorization component.

In step S204, the user information is encrypted by using the session key.

In step S205, the encrypted user information is fed back to the auxiliary authorization component.

Specific descriptions of the above steps may refer to corresponding content in the above embodiments, which will not be repeated herein.

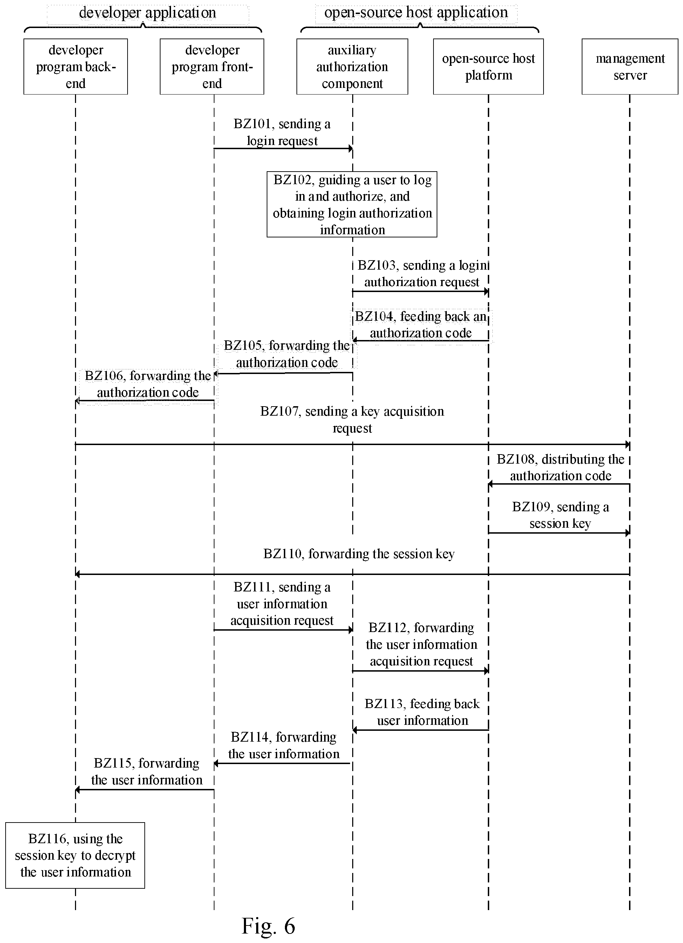

Fig. 6 is a signaling interaction diagram for implementing an authorization method according to an embodiment of the present disclosure. As shown in Fig. 6, the participating parties include: a developer application, an open-source host application and a management server. The developer application may include: a developer program front-end and a developer program back-end. The open-source host application may include: an auxiliary authorization component and an open-source host platform. The open-source host application has its own independent account system, that is, an account manager of the open-source host application is the open-source host platform. The authorization method may include the following steps.

In step BZ101, the developer program front-end sends a login request to the auxiliary authorization component.

In step BZ102, the auxiliary authorization component guides a user to log in and authorize, and obtains the user's login authorization information.

In step BZ103, the auxiliary authorization component sends a login authorization request to the open-source host platform, and the login authorization request includes the login authorization information.

In step BZ104, after the verification of the login authorization information is successful, the open-source host platform sends authorization success information to the auxiliary authorization component, and the authorization success information includes an authorization code.

In step BZ105, the auxiliary authorization component forwards the authorization code to the developer program front-end.

In step BZ106, the developer program front-end forwards the authorization code to the developer program back-end.

In step BZ107, the developer program back-end sends a key acquisition request to the management server, and the key acquisition request includes the authorization code.

In step BZ108, the management server distributes the authorization code to the open-source host platform.

In step BZ109, the open-source host platform generates a session key corresponding to the authorization code, and sends the session key to the management server.

In step BZ110, the management server forwards the session key to the developer program back-end.

In step BZ111, the developer program front-end sends a user information acquisition request to the auxiliary authorization component.

In step BZ112, the auxiliary authorization component forwards the user information acquisition request to the open-source host platform.

In step BZ113, the open-source host platform feeds back encrypted user information to the auxiliary authorization component.

In step BZ114, the auxiliary authorization component forwards the user information to the developer program front-end.

In step BZ115, the developer program front-end forwards the user information to the developer program back-end.

In step BZ116, the developer program back-end uses the session key to decrypt the user information.

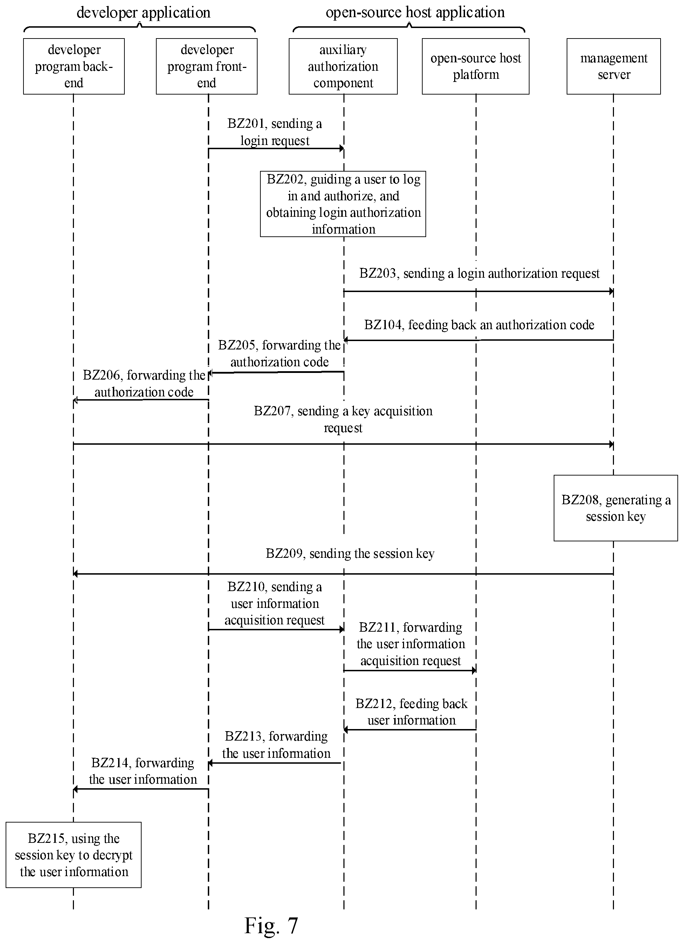

Fig. 7 is another signaling interaction diagram for implementing an authorization method according to an embodiment of the present disclosure. As shown in Fig. 7, the participating parties include: a developer application, an open-source host application and a management server. The developer application may include: a developer program front-end and a developer program back-end. The open-source host application may include: an auxiliary authorization component and an open-source host platform. The open-source host application does not have its own independent account system, and uses an account management system of an open-source development platform, that is, an account manager of the open-source host application is the management server. The authorization method may include the following steps.

In step BZ201, the developer program front-end sends a login request to the auxiliary authorization component.

In step BZ202, the auxiliary authorization component guides a user to log in and authorize, and obtains the user's login authorization information.

In step BZ203, the auxiliary authorization component sends a login authorization request to the management server, and the login authorization request includes the login authorization information.

In step BZ204, after the verification of the login authorization information is successful, the management server sends authorization success information to the auxiliary authorization component, and the authorization success information includes an authorization code.

In step BZ205, the auxiliary authorization component forwards the authorization code to the developer program front-end.

In step BZ206, the developer program front-end forwards the authorization code to the developer program back-end.

In step BZ207, the developer program back-end sends a key acquisition request to the management server, and the key acquisition request includes the authorization code.

In step BZ208, the management server generates a session key corresponding to the authorization code.

In step BZ209, the management server sends the session key to the developer program back-end.

In step BZ210, the developer program front-end sends a user information acquisition request to the auxiliary authorization component.

In step BZ211, the auxiliary authorization component forwards the user information acquisition request to the management server.

In step BZ212, the management server feeds back encrypted user information to the auxiliary authorization component.

In step BZ213, the auxiliary authorization component forwards the user information to the developer program front-end.

In step BZ214, the developer program front-end forwards the user information to the developer program back-end.

In step BZ215, the developer program back-end uses the session key to decrypt the user information.

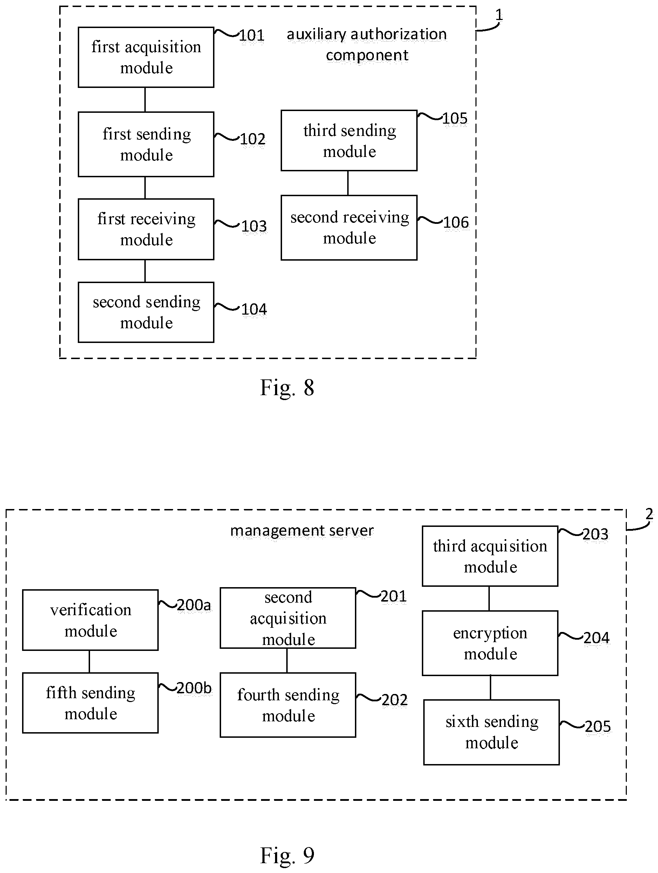

Fig. 8 is a structural block diagram of an auxiliary authorization component according to an embodiment of the present disclosure. As shown in Fig. 8, the auxiliary authorization component can execute the authorization methods in the embodiments shown in Figs. 2 and 3. The auxiliary authorization component may be integrated in an open-source host application, and the auxiliary authorization component includes: a first acquisition module 101, a first sending module 102, a first receiving module 103, and a second sending module 104.

The first acquisition module 101 is configured to obtain a user's login authorization information, in response to a login request sent by a developer application.

The first sending module 102 is configured to send a login authorization request to an account manager of the open-source host application, and the login authorization request includes the login authorization information.

The first receiving module 103 is configured to, after the verification of the login authorization information is successful, receive an authorization success information fed back by the account manager, and the authorization success information includes an authorization code.

The second sending module 104 is configured to send the authorization code to the developer application, to enable the developer application to obtain a session key corresponding to the authorization code from a management server.

In some embodiments, the auxiliary authorization component further includes: a third sending module 105 and a second receiving module 106.

The third sending module 105 is configured to forward a user information acquisition request to the account manager, in response to the user information acquisition request sent by the developer application.

The second receiving module 106 is configured to receive encrypted user information fed back by the account manager, and forward the user information to the developer application, to enable the developer application to decrypt the user information based on the session key.

In some embodiments, the login request may include a host identifier of the open-source host application. The auxiliary authorization component may further include: a determining module configured to determine the account manager of the open-source host application according to the host identifier.

In some embodiments, the account manager includes: the management server or an open-source host platform in the open-source host application.

Detailed descriptions of the above modules and interactions among the modules may refer to corresponding content in the above embodiments, which will not be repeated herein.

Fig. 9 is a structural block diagram of a management server according to an embodiment of the present disclosure. As shown in Fig. 9, the management server can execute the authorization methods in the embodiments shown in Figs. 4 and 5. The management server may include: a second acquisition module 201 and a fourth sending module 202.

The second acquisition module 201 is configured to acquire a corresponding session key, according to an authorization code in a key acquisition request, in response to the key acquisition request sent by a developer application.

The fourth sending module 202 is configured to feed the session key back to the developer application.

In some embodiments, the second acquisition module 201 includes: a determining unit, a generating unit, a sending unit, and a receiving unit.

The determining unit is configured to determine a user's account manager corresponding to the authorization code.

The generating unit is configured to generate the session key corresponding to the authorization code in a case that the account manager is the management server.

The sending unit is configured to forward the key acquisition request to a third-party open-source host platform in a case that the account manager is the third-party open-source host platform, to enable the third-party open-source host platform to generate the session key corresponding to the authorization code.

The receiving unit is configured to receive the session key fed back by the third-party open-source host platform.

In some embodiments, the management server may further include: a verification module 200a and a fifth sending module 200b.

The verification module 200a is configured to verify login authorization information in a login authorization request, in response to the login authorization request sent by an auxiliary authorization component.

The fifth sending module 200b is configured to, after the verification of the login authorization information is successful, feed authorization success information back to the auxiliary authorization component, and the authorization success information includes the authorization code.

In some embodiments, the management server may further include: a third acquisition module 203, an encryption module 204, and a sixth sending module 205.

The third acquisition module 203 is configured to obtain requested user information, in response to a user information acquisition request sent by the auxiliary authorization component.

The encryption module 204 is configured to encrypt the user information by using the session key.

The sixth sending module 205 is configured to feed the encrypted user information back to the auxiliary authorization component.

Detailed descriptions of the above modules and interactions among the modules may refer to corresponding content in the above embodiments, which will not be repeated herein.

According to the embodiments of the present disclosure, further provided is an authorization system, including the auxiliary authorization component and the management server provided according to the above embodiments.

According to the embodiments of the present disclosure, further provided is a computer-readable medium storing a computer program thereon. When the computer program is executed by a processor, the authorization method provided in the above embodiments is implemented.

It should be understood by those having ordinary skill in the art that the functional modules/units in all or some of the steps, systems, and devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or step may be performed through cooperation of several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). As well known by those having ordinary skill in the art, the term "computer storage media" includes volatile/nonvolatile and removable/non-removable media used in any method or technology for storing information (such as computer-readable instructions, data structures, program modules and other data). The computer storage media include, but are not limited to, RAM, ROM, EEPROM, flash memory or other memory techniques, CD-ROM, digital versatile disk (DVD) or other optical discs, magnetic cassette, magnetic tape, magnetic disk or other magnetic storage devices, or any other media which can be used to store the desired information and can be accessed by a computer. In addition, it is well known by those having ordinary skill in the art that the communication media generally include computer-readable instructions, data structures, program modules or other data in a modulated data signal, such as a carrier wave or other transmission mechanism, and may include any information delivery media.

It should be understood that both the exemplary embodiments and the specific terms disclosed in the present disclosure are for the purpose of illustration, rather than for limiting the present disclosure. It is obvious to those skilled in the art that the features, characteristics and/or elements described in connection with a particular embodiment may be used alone or in combination with the features, characteristics and/or elements described in connection with other embodiments, unless expressly indicated otherwise. Therefore, it should be understood by those skilled in the art that various changes in form and detail may be made without departing from the scope of the present disclosure as set forth in the appended claims.

## Claims

1. An authorization method applied to an auxiliary authorization component (1), wherein the auxiliary authorization component (1) is integrated in different open-source host applications, and each of the different open-source host applications is a local application able to carry running of a developer application (3) and act as a host for the developer application (3), and the developer application (3) is able to support cross-platform operation; and the authorization method comprises:
obtaining (S101) user's login authorization information, in response to a login request sent by the developer application (3), wherein the login request comprises a host identifier of an open-source host application;
determining an account manager of the open-source host application according to the host identifier, wherein the account manager comprises a management server (2) or an open-source host platform in the open-source host application;
sending (S102) a login authorization request to the account manager of the open-source host application, the login authorization request comprising the login authorization information;
receiving (S103) authorization success information fed back by the account manager, after the login authorization information is verified successfully, the authorization success information comprising an authorization code; and
sending (S104) the authorization code to the developer application (3), to enable the developer application (3) to obtain a session key corresponding to the authorization code from the management server (2);
wherein sending (S102) the login authorization request to the account manager of the open-source host application comprises:
sending the login authorization request to the open-source host platform in the open-source host application, in response to determining that the account manager of the open-source host application is the open-source host platform in the open-source host application; and
sending the login authorization request to the management server (2), in response to determining that the account manager of the open-source host application is the management server (2).

2. The authorization method of claim 1, after sending (S104) the authorization code to the developer application (3), further comprising:
forwarding (S105) a user information acquisition request sent by the developer application (3) to the account manager, in response to the user information acquisition request; and
receiving (S106) encrypted user information fed back by the account manager, and forwarding the user information to the developer application (3), to enable the developer application (3) to decrypt the user information based on the session key.

3. An authorization method applied to a management server (2), comprising:
acquiring (S201) a corresponding session key, according to an authorization code in a key acquisition request sent by a developer application (3), in response to receiving the key acquisition request; and
feeding (S202) the session key back to the developer application (3);
wherein before receiving the key acquisition request sent by the developer application (3), the method further comprises:
verifying (S200a) login authorization information in a login authorization request sent by an auxiliary authorization component (1), in response to the login authorization request; and
feeding (S200b) authorization success information back to the auxiliary authorization component (1), after the login authorization information is verified successfully, to enable the auxiliary authorization component (1) to send the authorization code to the developer application (3); wherein the authorization success information comprises the authorization code;
wherein acquiring (S201) the corresponding session key, according to the authorization code in the key acquisition request comprises:
determining an account manager corresponding to the authorization code;
generating the session key corresponding to the authorization code, in response to the account manager being the management server (2); and
forwarding the key acquisition request to a third-party open-source host platform in response to the account manager being the third-party open-source host platform; and receiving the session key fed back by the third-party open-source host platform.

4. The authorization method of claim 3, after feeding (S202) the session key back to the developer application (3), further comprising:
obtaining (S203) requested user information, in response to a user information acquisition request sent by an auxiliary authorization component (1);
encrypting (S204) the user information by using the session key; and
feeding (S205) the encrypted user information back to the auxiliary authorization component (1).

5. An auxiliary authorization component (1), wherein the auxiliary authorization component (1) is integrated in different open-source host applications, and each of the different open-source host applications is a local application able to carry running of a developer application (3) and act as a host for the developer application (3), and the developer application (3) is able to support cross-platform operation; comprising:
a first acquisition module (101) configured to obtain user's login authorization information, in response to a login request sent by the developer application (3), wherein the login request comprises a host identifier of an open-source host application;
a determining module configured to determine an account manager of the open-source host application according to the host identifier, wherein the account manager comprises a management server (2) or an open-source host platform in the open-source host application;
a first sending module (102) configured to send a login authorization request to the account manager of the open-source host application, the login authorization request comprising the login authorization information;
a first receiving module (103) configured to, after the login authorization information is verified successfully, receive authorization success information fed back by the account manager, the authorization success information comprising an authorization code; and
a second sending module (104) configured to send the authorization code to the developer application (3), to enable the developer application (3) to obtain a session key corresponding to the authorization code from the management server (2);
wherein the first sending module (102) is configured to:
send the login authorization request to the open-source host platform in the open-source host application, in response to determining that the account manager of the open-source host application is the open-source host platform in the open-source host application; and
send the login authorization request to the management server (2), in response to determining that the account manager of the open-source host application is the management server (2).

6. The auxiliary authorization component (1) of claim 5, further comprising:
a third sending module (105) configured to forward a user information acquisition request sent by the developer application (3) to the account manager, in response to the user information acquisition request; and
a second receiving module (106) configured to receive encrypted user information fed back by the account manager, and forward the user information to the developer application (3), to enable the developer application (3) to decrypt the user information based on the session key.

7. A management server (2), comprising:
a second acquisition module (201) configured to acquire a corresponding session key, according to an authorization code in a key acquisition request sent by a developer application (3), in response to the key acquisition request; and
a fourth sending module (202) configured to feed the session key back to the developer application (3);
wherein the management server (2) comprises:
a verification module (200a) configured to login authorization information in a login authorization request sent by an auxiliary authorization component (1), in response to the login authorization request; and
a fifth sending module (200b) configured to, after the login authorization information is verified successfully, feed authorization success information back to the auxiliary authorization component (1), to enable the auxiliary authorization component (1) to send the authorization code to the developer application (3); wherein the authorization success information comprises the authorization code;
wherein the second acquisition module (201) comprises:
a determining unit configured to determine an account manager corresponding to the authorization code;
a generating unit configured to generate the session key corresponding to the authorization code, in response to the account manager being the management server (2);
a sending unit configured to forward the key acquisition request to a third-party open-source host platform in response to the account manager being the third-party open-source host platform; and
a receiving unit configured to receive the session key fed back by the third-party open-source host platform.

8. The management server (2) of claim 7, further comprising:
a third acquisition module (203) configured to obtain requested user information, in response to a user information acquisition request sent by an auxiliary authorization component (1);
an encryption module (204) configured to encrypt the user information by using the session key; and
a sixth sending module (205) configured to feed the encrypted user information back to the auxiliary authorization component (1).

9. A computer-readable medium storing a computer program thereon, wherein the computer program is executed by a processor to implement the authorization method of any one of claims 1 to 4.

## Patentansprüche

1. Autorisierungsverfahren, das auf eine Hilfsautorisierungskomponente (1) angewendet wird, wobei die Hilfsautorisierungskomponente (1) in verschiedene Open-Source-Host-Anwendungen integriert ist und jede der verschiedenen Open-Source-Host-Anwendungen eine lokale Anwendung ist, die in der Lage ist, eine Entwickleranwendung (3) auszuführen und als Host für die Entwickleranwendung (3) zu fungieren, und die Entwickleranwendung (3) in der Lage ist, einen plattformübergreifenden Betrieb zu unterstützen; und das Autorisierungsverfahren umfasst:
Erhalten (S101) von Anmeldeautorisierungsinformationen eines Benutzers als Reaktion auf eine von der Entwickleranwendung (3) gesendete Anmeldeanforderung, wobei die Anmeldeanforderung eine Host-Identifikation einer Open-Source-Host-Anwendung umfasst;
Bestimmen eines Kontoverwalters der Open-Source-Host-Anwendung gemäß der Host-Identifikation, wobei der Kontoverwalter einen Management-Server (2) oder eine Open-Source-Host-Plattform in der Open-Source-Host-Anwendung umfasst;
Senden (S102) einer Anmeldeautorisierungsanforderung an den Kontoverwalter der Open-Source-Host-Anwendung, wobei die Anmeldeautorisierungsanforderung die Anmeldeautorisierungsinformationen umfasst;
Empfangen (S103) von Autorisierungserfolgsinformationen, die von dem Kontoverwalter zurückgeführt werden, nachdem die Anmeldeautorisierungsinformationen erfolgreich verifiziert wurden, wobei die Autorisierungserfolgsinformationen einen Autorisierungscode umfassen; und
Senden (S104) des Autorisierungscodes an die Entwickleranwendung (3), um die Entwickleranwendung (3) in die Lage zu versetzen, einen dem Autorisierungscode entsprechenden Sitzungsschlüssel von dem Verwaltungsserver (2) zu erhalten;
wobei das Senden (S102) der Anmeldeautorisierungsanforderung an den Kontoverwalter der Open-Source-Host-Anwendung umfasst:
Senden der Anmeldeautorisierungsanforderung an die Open-Source-Host-Plattform in der Open-Source-Host-Anwendung als Reaktion auf die Feststellung, dass der Kontoverwalter der Open-Source-Host-Anwendung die Open-Source-Host-Plattform in der Open-Source-Host-Anwendung ist; und
Senden der Anmeldeautorisierungsanforderung an den Verwaltungsserver (2) als Reaktion auf die Feststellung, dass der Kontoverwalter der Open-Source-Host-Anwendung der Verwaltungsserver (2) ist.

2. Autorisierungsverfahren nach Anspruch 1, das nach dem Senden (S104) des Autorisierungscodes an die Entwickleranwendung (3) ferner umfasst:
Weiterleiten (S105) einer von der Entwickleranwendung (3) gesendeten Benutzerinformationserfassungsanforderung an den Kontoverwalter in Reaktion auf die Benutzerinformationserfassungsanforderung; und
Empfangen (S106) verschlüsselter Benutzerinformationen, die von dem Kontoverwalter zurückgesendet werden, und Weiterleiten der Benutzerinformationen an die Entwickleranwendung (3), um die Entwickleranwendung (3) in die Lage zu versetzen, die Benutzerinformationen basierend auf dem Sitzungsschlüssel zu entschlüsseln.

3. Autorisierungsverfahren, das auf einen Verwaltungsserver (2) angewendet wird, umfassend:
Erfassen (S201) eines entsprechenden Sitzungsschlüssels gemäß einem Autorisierungscode in einer von einer Entwickleranwendung (3) gesendeten Schlüsselerfassungsanforderung in Reaktion auf den Empfang der Schlüsselerfassungsanforderung; und
Zuführen (S202) des Sitzungsschlüssels zurück an die Entwickleranwendung (3);
wobei das Verfahren vor dem Empfangen der von der Entwickleranwendung (3) gesendeten Schlüsselerfassungsanforderung ferner umfasst:
Verifizieren (S200a) von Anmeldeautorisierungsinformationen in einer Anmeldeautorisierungsanforderung, die von einer Hilfsautorisierungskomponente (1) gesendet wird, in Reaktion auf die Anmeldeautorisierungsanforderung; und
Zuführen (S200b) von Autorisierungserfolgsinformationen zurück zu der Hilfsautorisierungskomponente (1), nachdem die Anmeldeautorisierungsinformationen erfolgreich verifiziert wurden, um die Hilfsautorisierungskomponente (1) in die Lage zu versetzen, den Autorisierungscode an die Entwickleranwendung (3) zu senden; wobei die Autorisierungserfolgsinformationen den Autorisierungscode umfassen;
wobei das Erfassen (S201) des entsprechenden Sitzungsschlüssels gemäß dem Autorisierungscode in der Schlüsselerfassungsanforderung umfasst:
Bestimmen eines Kontoverwalters, der dem Autorisierungscode entspricht;
Erzeugen des Sitzungsschlüssels, der dem Autorisierungscode entspricht, in Reaktion darauf, dass der Kontoverwalter der Verwaltungsserver (2) ist; und
Weiterleiten der Schlüsselerfassungsanforderung an eine Open-Source-Host-Plattform eines Drittanbieters in Reaktion darauf, dass der Kontoverwalter die Open-Source-Host-Plattform eines Drittanbieters ist; und Empfangen des Sitzungsschlüssels, der von der Open-Source-Host-Plattform eines Drittanbieters zurückgesendet wird.

4. Autorisierungsverfahren nach Anspruch 3, das nach dem Zuführen (S202) des Sitzungsschlüssels zurück an die Entwickleranwendung (3) ferner umfasst:
Erhalten (S203) angeforderter Benutzerinformationen als Reaktion auf eine Benutzerinformationserfassungsanforderung, die von einer zusätzlichen Autorisierungskomponente (1) gesendet wird;
Verschlüsseln (S204) der Benutzerinformationen unter Verwendung des Sitzungsschlüssels; und
Zuführen (S205) der verschlüsselten Benutzerinformationen zurück an die zusätzliche Autorisierungskomponente (1).

5. Hilfsautorisierungskomponente (1), wobei die Hilfsautorisierungskomponente (1) in verschiedene Open-Source-Host-Anwendungen integriert ist und jede der verschiedenen Open-Source-Host-Anwendungen eine lokale Anwendung ist, die in der Lage ist, eine Entwickleranwendung (3) auszuführen und als Host für die Entwickleranwendung (3) zu fungieren, und die Entwickleranwendung (3) in der Lage ist, einen plattformübergreifenden Betrieb zu unterstützen; umfassend
ein erstes Erfassungsmodul (101), das so konfiguriert ist, dass es als Reaktion auf eine von der Entwickleranwendung (3) gesendete Anmeldeanforderung die Anmeldeautorisierungsinformationen des Benutzers erhält, wobei die Anmeldeanforderung eine Host-Identifikation einer Open-Source-Host-Anwendung umfasst;
ein Bestimmungsmodul, das so konfiguriert ist, dass es einen Kontoverwalter der Open-Source-Host-Anwendung gemäß der Host-Identifikation bestimmt, wobei der Kontoverwalter einen Management-Server (2) oder eine Open-Source-Host-Plattform in der Open-Source-Host-Anwendung umfasst;
ein erstes Sendemodul (102), das so konfiguriert ist, dass es eine Anmeldeautorisierungsanforderung an den Kontoverwalter der Open-Source-Host-Anwendung sendet, wobei die Anmeldeautorisierungsanforderung die Anmeldeautorisierungsinformationen umfasst;
ein erstes Empfangsmodul (103), das so konfiguriert ist, dass es, nachdem die Anmeldeautorisierungsinformationen erfolgreich verifiziert wurden, Autorisierungserfolgsinformationen empfängt, die von dem Kontoverwalter zurückgeführt werden, wobei die Autorisierungserfolgsinformationen einen Autorisierungscode umfassen; und
ein zweites Sendemodul (104), das so konfiguriert ist, dass es den Autorisierungscode an die Entwickleranwendung (3) sendet, um die Entwickleranwendung (3) in die Lage zu versetzen, einen dem Autorisierungscode entsprechenden Sitzungsschlüssel von dem Verwaltungsserver (2) zu erhalten;
wobei das erste Sendemodul (102) konfiguriert ist, um:
die Anmeldeautorisierungsanforderung an die Open-Source-Host-Plattform in der Open-Source-Host-Anwendung zu senden, in Reaktion auf die Feststellung, dass der Kontoverwalter der Open-Source-Host-Anwendung die Open-Source-Host-Plattform in der Open-Source-Host-Anwendung ist; und
Senden der Anmeldeautorisierungsanforderung an den Verwaltungsserver (2) als Reaktion auf die Feststellung, dass der Kontoverwalter der Open-Source-Host-Anwendung der Verwaltungsserver (2) ist.

6. Die Hilfsautorisierungskomponente (1) nach Anspruch 5, die ferner Folgendes umfasst:
ein drittes Sendemodul (105), das so konfiguriert ist, dass es eine von der Entwickleranwendung (3) gesendete Benutzerinformationserfassungsanforderung als Reaktion auf die Benutzerinformationserfassungsanforderung an den Kontoverwalter weiterleitet; und
ein zweites Empfangsmodul (106), das so konfiguriert ist, dass es verschlüsselte Benutzerinformationen empfängt, die von dem Kontoverwalter zurückgeführt werden, und die Benutzerinformationen an die Entwickleranwendung (3) weiterleitet, damit die Entwickleranwendung (3) die Benutzerinformationen auf der Grundlage des Sitzungsschlüssels entschlüsseln kann.

7. Ein Verwaltungsserver (2), umfassend:
ein zweites Erfassungsmodul (201), das so konfiguriert ist, dass es einen entsprechenden Sitzungsschlüssel gemäß einem Autorisierungscode in einer von einer Entwickleranwendung (3) gesendeten Schlüsselerfassungsanforderung in Reaktion auf die Schlüsselerfassungsanforderung erfasst; und
ein viertes Sendemodul (202), das so konfiguriert ist, dass es den Sitzungsschlüssel an die Entwickleranwendung (3) zurückführt;
wobei der Verwaltungsserver (2) umfasst:
ein Verifizierungsmodul (200a), das so konfiguriert ist, dass es als Reaktion auf die Anmeldeautorisierungsanforderung Anmeldeinformationen in einer von einer Hilfsautorisierungskomponente (1) gesendeten Anmeldeautorisierungsanforderung anmeldet; und
ein fünftes Sendemodul (200b), das so konfiguriert ist, dass es, nachdem die Anmeldeautorisierungsinformationen erfolgreich verifiziert wurden, Autorisierungserfolgsinformationen an die Hilfsautorisierungskomponente (1) zurückführt, um die Hilfsautorisierungskomponente (1) in die Lage zu versetzen, den Autorisierungscode an die Entwickleranwendung (3) zu senden; wobei die Autorisierungserfolgsinformationen den Autorisierungscode umfassen;
wobei das zweite Erfassungsmodul (201) umfasst:
eine Bestimmungseinheit, die konfiguriert ist, um einen Kontoverwalter zu bestimmen, der dem Autorisierungscode entspricht;
eine Erzeugungseinheit, die so konfiguriert ist, dass sie den Sitzungsschlüssel, der dem Autorisierungscode entspricht, in Reaktion darauf erzeugt, dass der Kontoverwalter der Verwaltungsserver (2) ist;
eine Sendeeinheit, die so konfiguriert ist, dass sie die Schlüsselerwerbsanforderung an eine Open-Source-Host-Plattform eines Drittanbieters weiterleitet, wenn der Kontoverwalter die Open-Source-Host-Plattform eines Drittanbieters ist; und
eine Empfangseinheit, die so konfiguriert ist, dass sie den Sitzungsschlüssel empfängt, der von der Open-Source-Host-Plattform eines Drittanbieters zurückgeführt wird.

8. Der Verwaltungsserver (2) nach Anspruch 7, der ferner Folgendes umfasst:
ein drittes Erfassungsmodul (203), das so konfiguriert ist, dass es angeforderte Benutzerinformationen in Reaktion auf eine Benutzerinformationserfassungsanforderung erhält, die von einer zusätzlichen Autorisierungskomponente (1) gesendet wird;
ein Verschlüsselungsmodul (204), das zum Verschlüsseln der Benutzerinformationen unter Verwendung des Sitzungsschlüssels konfiguriert ist; und
ein sechstes Sendemodul (205), das so konfiguriert ist, dass es die verschlüsselten Benutzerinformationen an die zusätzliche Autorisierungskomponente (1) zurückführt.

9. Computerlesbares Medium, auf dem ein Computerprogramm gespeichert ist, wobei das Computerprogramm von einem Prozessor ausgeführt wird, um das Autorisierungsverfahren nach einem der Ansprüche 1 bis 4 zu implementieren.

## Revendications

1. Procédé d'autorisation appliqué à un composant d'autorisation auxiliaire (1), dans lequel le composant d'autorisation auxiliaire (1) est intégré dans différentes applications hôtes à source ouverte, et chacune des différentes applications hôtes à source ouverte est une application locale capable de supporter l'exécution d'une application de développement (3) et d'agir en tant qu'hôte pour l'application de développement (3), et l'application de développement (3) est capable de supporter un fonctionnement multiplateforme ; et le procédé d'autorisation comprend :
obtenir (S101) d'informations d'autorisation de connexion de l'utilisateur, en réponse à une demande de connexion envoyée par l'application de développement (3), dans laquelle la demande de connexion comprend un identifiant d'hôte d'une application hôte à source ouverte ;
déterminer un gestionnaire de compte de l'application hôte à source ouverte selon l'identifiant d'hôte, dans lequel le gestionnaire de compte comprend un serveur de gestion (2) ou une plate-forme hôte à source ouverte dans l'application hôte à source ouverte ;
envoyer (S102) une demande d'autorisation de connexion au gestionnaire de compte de l'application hôte à source ouverte, la demande d'autorisation de connexion comprenant les informations d'autorisation de connexion ;
recevoir (S 103) des informations de réussite d'autorisation renvoyées par le gestionnaire de compte, après que les informations d'autorisation de connexion ont été vérifiées avec succès, les informations de réussite d'autorisation comprenant un code d'autorisation ; et
envoyer (S104) le code d'autorisation à l'application de développement (3), pour permettre à l'application de développement (3) d'obtenir une clé de session correspondant au code d'autorisation à partir du serveur de gestion (2) ;
dans lequel envoyer (S102) la demande d'autorisation de connexion au gestionnaire de compte de l'application hôte à source ouverte comprend :
envoyer la demande d'autorisation de connexion à la plate-forme hôte à source ouverte dans l'application hôte à source ouverte, en réponse à la détermination du fait que le gestionnaire de compte de l'application hôte à source ouverte est la plate-forme hôte à source ouverte dans l'application hôte à source ouverte ; et
envoyer la demande d'autorisation de connexion au serveur de gestion (2), en réponse à la détermination du fait que le gestionnaire de compte de l'application hôte à source ouverte est le serveur de gestion (2).

2. Procédé d'autorisation de la revendication 1, après avoir envoyé (S104) le code d'autorisation à l'application de développement (3), comprenant en outre :
transmettre (S105) une demande d'acquisition d'informations utilisateur envoyée par l'application de développement (3) au gestionnaire de compte, en réponse à la demande d'acquisition d'informations utilisateur ; et
recevoir (S106) des informations utilisateur cryptées renvoyées par le gestionnaire de compte, et transmettre les informations utilisateur à l'application de développement (3), pour permettre à l'application de développement (3) de décrypter les informations utilisateur sur la base de la clé de session.

3. Procédé d'autorisation appliqué à un serveur de gestion (2), comprenant :
acquérir (S201) une clé de session correspondante, selon un code d'autorisation dans une demande d'acquisition de clé envoyée par une application de développement (3), en réponse à la réception de la demande d'acquisition de clé ; et
renvoyer (S202) la clé de session à l'application de développeur (3) ;
dans lequel, avant de recevoir la demande d'acquisition de clé envoyée par l'application de développement (3), le procédé comprend en outre les étapes suivantes
vérifier (S200a) des informations d'autorisation de connexion dans une demande d'autorisation de connexion envoyée par un composant d'autorisation auxiliaire (1), en réponse à la demande d'autorisation de connexion ; et
renvoyer (S200b) des informations de réussite d'autorisation au composant d'autorisation auxiliaire (1), après que les informations d'autorisation de connexion ont été vérifiées avec succès, pour permettre au composant d'autorisation auxiliaire (1) d'envoyer le code d'autorisation à l'application de développement (3) ; dans lequel les informations de réussite d'autorisation comprennent le code d'autorisation ;
dans lequel acquérir (S201) la clé de session correspondante, selon le code d'autorisation dans la demande d'acquisition de clé comprend :
déterminer un gestionnaire de compte correspondant au code d'autorisation ;
générer la clé de session correspondant au code d'autorisation, en réponse au fait que le gestionnaire de compte est le serveur de gestion (2) ; et
transmettre la demande d'acquisition de clé à une plate-forme hôte à source ouverte tierce en réponse au gestionnaire de compte étant la plate-forme hôte à source ouverte tierce ; et recevoir la clé de session renvoyée par la plate-forme hôte à source ouverte tierce.

4. Le procédé d'autorisation de la revendication 3, après avoir renvoyé (S202) la clé de session à l'application de développement (3), comprend en outre :
obtenir (S203) d'informations utilisateur demandées, en réponse à une demande d'acquisition d'informations utilisateur envoyée par un composant d'autorisation auxiliaire (1) ;
crypter (S204) des informations utilisateur en utilisant la clé de session ; et
renvoyer (S205) les informations utilisateur cryptées au composant d'autorisation auxiliaire (1).

5. Composant d'autorisation auxiliaire (1), dans lequel le composant d'autorisation auxiliaire (1) est intégré dans différentes applications hôtes à source ouverte, et chacune des différentes applications hôtes à source ouverte est une application locale capable de supporter l'exécution d'une application de développement (3) et d'agir en tant qu'hôte pour l'application de développement (3), et l'application de développement (3) est capable de supporter un fonctionnement multiplateforme ; comprenant :
un premier module d'acquisition (101) configuré pour obtenir des informations d'autorisation de connexion de l'utilisateur, en réponse à une demande de connexion envoyée par l'application de développement (3), dans lequel la demande de connexion comprend un identifiant d'hôte d'une application hôte à source ouverte ;
un module de détermination configuré pour déterminer un gestionnaire de compte de l'application hôte à source ouverte selon l'identifiant d'hôte, dans lequel le gestionnaire de compte comprend un serveur de gestion (2) ou une plate-forme hôte à source ouverte dans l'application hôte à source ouverte ;
un premier module d'envoi (102) configuré pour envoyer une demande d'autorisation de connexion au gestionnaire de compte de l'application hôte à source ouverte, la demande d'autorisation de connexion comprenant les informations d'autorisation de connexion ;
un premier module de réception (103) configuré pour, après que les informations d'autorisation de connexion sont vérifiées avec succès, recevoir des informations de succès d'autorisation renvoyées par le gestionnaire de compte, les informations de succès d'autorisation comprenant un code d'autorisation ; et
un second module d'envoi (104) configuré pour envoyer le code d'autorisation à l'application de développement (3), pour permettre à l'application de développement (3) d'obtenir une clé de session correspondant au code d'autorisation à partir du serveur de gestion (2) ;
dans lequel le premier module d'envoi (102) est configuré pour :
envoyer la demande d'autorisation de connexion à la plate-forme hôte à source ouverte dans l'application hôte à source ouverte, en réponse à la détermination que le gestionnaire de compte de l'application hôte à source ouverte est la plate-forme hôte à source ouverte dans l'application hôte à source ouverte ; et
envoyer la demande d'autorisation de connexion au serveur de gestion (2), en réponse à la détermination du fait que le gestionnaire de compte de l'application hôte à source ouverte est le serveur de gestion (2).

6. Le composant d'autorisation auxiliaire (1) de la revendication 5, comprenant en outre :
un troisième module d'envoi (105) configuré pour transmettre une demande d'acquisition d'informations utilisateur envoyée par l'application de développement (3) au gestionnaire de compte, en réponse à la demande d'acquisition d'informations utilisateur ; et
un deuxième module de réception (106) configuré pour recevoir des informations utilisateur cryptées renvoyées par le gestionnaire de compte, et transmettre les informations utilisateur à l'application de développement (3), pour permettre à l'application de développement (3) de décrypter les informations utilisateur sur la base de la clé de session.

7. Serveur de gestion (2), comprenant :
un deuxième module d'acquisition (201) configuré pour acquérir une clé de session correspondante, selon un code d'autorisation dans une demande d'acquisition de clé envoyée par une application de développement (3), en réponse à la demande d'acquisition de clé ; et
un quatrième module d'envoi (202) configuré pour renvoyer la clé de session à l'application de développement (3) ;
dans lequel le serveur de gestion (2) comprend
un module de vérification (200a) configuré pour connecter des informations d'autorisation dans une demande d'autorisation de connexion envoyée par un composant d'autorisation auxiliaire (1), en réponse à la demande d'autorisation de connexion ; et
un cinquième module d'envoi (200b) configuré pour, après que les informations d'autorisation de connexion ont été vérifiées avec succès, renvoyer des informations de réussite d'autorisation au composant d'autorisation auxiliaire (1), pour permettre au composant d'autorisation auxiliaire (1) d'envoyer le code d'autorisation à l'application de développement (3) ; dans lequel les informations de réussite d'autorisation comprennent le code d'autorisation ;
dans lequel le second module d'acquisition (201) comprend :
une unité de détermination configurée pour déterminer un gestionnaire de compte correspondant au code d'autorisation ;
une unité de génération configurée pour générer la clé de session correspondant au code d'autorisation, en réponse au fait que le gestionnaire de compte est le serveur de gestion (2) ;
une unité d'envoi configurée pour transmettre la demande d'acquisition de clé à une plate-forme hôte à source ouverte tierce en réponse au gestionnaire de compte étant la plate-forme hôte à source ouverte tierce ; et
une unité de réception configurée pour recevoir la clé de session renvoyée par la plate-forme hôte à source ouverte tierce.

8. Le serveur de gestion (2) de la revendication 7, comprenant en outre :
un troisième module d'acquisition (203) configuré pour obtenir les informations utilisateur demandées, en réponse à une demande d'acquisition d'informations utilisateur envoyée par un composant d'autorisation auxiliaire (1) ;
un module de cryptage (204) configuré pour crypter les informations utilisateur en utilisant la clé de session ; et
un sixième module d'envoi (205) configuré pour renvoyer les informations utilisateur cryptées au composant d'autorisation auxiliaire (1).

9. Support lisible par ordinateur stockant un programme informatique, dans lequel le programme informatique est exécuté par un processeur pour mettre en oeuvre le procédé d'autorisation de l'une quelconque des revendications 1 à 4.
